# EUROPEAN PATENT SPECIFICATION

(11) **EP 1 303 185 B1**
(45) Date of publication and mention of the grant of the patent: **13.10.2004**
(21) Application number: 01969379.5
(22) Date of filing: 12.07.2001
(51) Int. Cl.: A01N 25/02

(54) **PESTICIDIAL COMPOSITION**
PESTIZIDE ZUSAMMENSETZUNG
COMPOSITION PESTICIDE

(30) Priority: 14.07.2000 NZ 50577900
(43) Date of publication of application: 23.04.2003
(73) Proprietor: Akzo Nobel N.V., 6824 BM Arnhem (NL)
(72) Inventor: SOUTHWORTH, John, RD5, Hamilton (NZ)
(74) Representative: Van Gent, Marieke
(86) International application number: PCT/EP2001/008093
(87) International publication number: WO 2002/005639

(56) References cited:
- EP-A- 0 433 909
- WO-A-99/32086
- PATENT ABSTRACTS OF JAPAN vol. 016, no. 156 (C-0930), 16 April 1992 (1992-04-16) & JP 04 009302 A (KUMIAI CHEM IND CO LTD), 14 January 1992 (1992-01-14)
- R. CURTIS: "Stable Pesticide Emulsions" RESEARCH DISCLOSURE, December 1989 (1989-12), pages 981-982, XP000096159 HAVANT GB

## Description

The invention relates to a pesticidial composition of an insect growth regulating insecticide in a non-aqueous solution, a method for making such composition and a method of treating or controlling insects and parasites on animals.

Insecticides, which control insects, but which offer improved human and environmental safety are a goal for animal, crop and horticultural production systems as well as for domestic use. In the agricultural sector, e.g. sheep and cattle, external parasites have been controlled since the 1940's using a variety of insecticides, particularly the organochlorines, the organophosphates and more recently the synthetic pyrethroids.

In recent times, due mainly to environmental concerns, the bio-accumulating organochlorines have been banned. The organophosphates and the synthetic pyrethroids require careful handling and resistance development and concern about their safety to users as well as the environmental concerns continue to be an issue.

Insect growth regulating (IGR) insecticides are also well known for the control of a variety of insect pests and have provided an option, which addresses safety concerns with many other insecticides, relating to user safety, animal safety, and environmental issues.

The IGRs, as a group, act by interference with the life cycle of the insect, and are therefore known for use in a preventive manner but not as a contact killer. While IGRs are useful compounds in combating insect pests, the benefit of IGR use is restricted due to its limited mode of use. It is not until hatching or moulting occurs, that IGRs have any effect and therefore IGRs are not known for use against adult stages or for immediate effect against an existing stage (e.g. larval stage) of pests.

International patent application WO 99/32086 discloses a topically acceptable aqueous pour-on formulation adapted for localized external application to an animal, which formulation includes an effective amount of a water insoluble insect growth regulator, a suspending agent, a surfactant or a mixture of surfactants, and an aqueous carrier.

European patent application EP 0433909 discloses a formulation of bioactive benzophenylurea compounds, provides a formulation which solubilises bio-active substituted benzoylphenyl ureasin water and enhances absorption and maintains adequate blood levels of said urea when administered to warm-blooded animals.

Patent Abstracts of Japan JP 02109769 discloses an agricultural chemical emulsion containing a benzoylurea based compound, N-methyl-2-pyrrolidone, alkylated naphtalene, water insoluble solvent having high boiling point and a surfactant.

Research disclosure no XP 000096159, "Stable Pesticide Emulsions "discloses an agricultural stable emulsifiable concentrate comprising a pesticide, one or more pyrrolidone solvents, an anionic or non-ionic surfactant and an aromatic solvent.

It was therefore the object of the current invention to provide a pesticidial composition for an IGR that avoids the drawback of the delayed action, caused by its mode of action.

The current invention provides such a pesticidial composition for local application to an animal characterized in that it comprises an effective amount of an insect growth regulator (IGR) and a solvent system comprising an aromatic hydrocarbon solvent and a propylene glycol monoalkyl ether and a pyrrolidone solvent.

It was surprisingly found that in the non-aqueous composition according to the invention the IGR continues to act in its known preventive manner and the composition also acts as a contact killer for insect pests at both the larval and adult stages.

In the past, compositions of IGRs have only been able to be used as preventive agents and not as contact pesticides due to the mode of action of the IGR, which involves interfering with the deposition of chitin during the life cycle of the insect. As a contact kill pesticide, the composition of the invention exhibits the unexpected effect of being able to act against external parasites on contact with the pest resulting in a two- stage attack from the application of a single product.

In addition to the benefit of providing a contact kill effect, the composition according to the invention, showed the added benefit of a reduction on the dose rate required, to maintain its effect.

Various solvents that are suitable for pesticidial compositions are known in the art. Solvents in which the pesticides may be dissolved are for example aliphatic and aromatic hydrocarbons such as hexane, cyclohexane, benzene, toluene, xylene, mineral oil or kerosine. Known solvents are cyclohexanone, as well as halogenated hydrocarbons such as methylene chloride, chloroform and o-dichlorobenzene.

Preferably these solvent system will comprise aromatic solvents, e.g. aromatic hydrocarbons. Useful are mixtures of mono- and polyalkylated aromatics prepared from petroleum such as commercially available Solvesso (Trademark of Imperial Oil) or Shellsol (Trademark of Shell).

Preferably the aromatic hydrocarbon solvent is selected from Solvesso 150 and/or Solvesso 200.

Solvesso 150 (aromatic Naphta 150 flash, Pegasol R 150 (Trademark of Mobil Inc.), Shellsol AB , Absol A150 ) is a high aromatic solvent of rather low volatility that is used for insecticide sprays and aerosols.

Preferably the content of the aromatic hydrocarbon solvent is between 20 -60% by weight based on the total weight of the composition. When used with sheep, a top level of Solyesso of 500 mg/ animal and with cattle a top level of Solvesso of 900 mg/ animal is preferred.

The composition according to the invention further comprises ether- based solvents such as propylene glycol monoalkylether solvents. Propylene glycol ethers are a group of chemicals with a wide variety of uses in industrial, commercial and consumer applications.

The composition according to the invention characterized in that the propylene glycol monoalkylether is dipropylene glycol mono methyl ether (DPGME).
Dipropylene glycol monomethyl ether (1-(2- methoxy-2- methylethoxy)-2- propanol. CAS No. 34590-94-8 (mixture) is commercially available as e.g. Dowanol DPM Glycol ether, Ucar Solvent 2M, Propasol Solvent DM, Poly-Solv DPM Solvent, Arcosol DPM.

The composition according to claims the invention characterized in that the pyrrolidone solvent is N-methyl-2-pyrrolidone.

N-methyl-2- pyrrolidone is a solvent, widely used in petrochemical, pesticide, pharmaceuticals, electronic materials, etc. N-Methyl Pyrrolidone (NMP), e.g. from BASF, is associated with high solvent activity.

The composition according to the invention characterized in that the content of the pyrrolidone solvent is 5 -15% by weight based on the total weight of the composition.

Suitable plant oils that can be also used in the composition according to the current invention include castor oil, sunflower oil, canola oil, soybean oil and cottonseed oil. IGRs are compounds that act by interference with the life cycle of an insect. Specific examples of IGR insecticides are chitin synthesis inhibitors (e.g. cyromazine, diflubenzuron, lufenuron, novaluron, triflumuron), juvenile hormone mimics (e.g. fenoxycarb, methoprene, pyriproxyfen), juvenile hormones (juvenile hormones I, II and III), moulting hormone antagonists (e.g. chromafenozide, methoxyfenozide), moulting hormones (e.g. ecdysterone), moulting inhibitors, precocenes and dicyclanil.

The composition according to the invention characterized in that the insect growth regulator is a chitin synthesis inhibitor.

Chitin synthesis inhibitors are classified as benzoylphenylureas and possess a number of halogen substituents. Diflubenzuron is the prototypical compound in this series, although second generation compounds also exist. The water solubility of these compounds is typically extremely low (< 1 ppm), as is their mammalian toxicity. Insects exposed to these compounds are unable to form normal cuticle because the ability to synthesize chitin is lost. About 50% of the cuticle comprise chitin, which is a polysaccharide of N-acetylglucosamine. This polymerization is blocked by the benzoylphenylureas and may occur through inhibition of a membrane transport step involving UDP-N-acetylglucosamine. In the absence of chitin, the cuticle becomes thin and brittle, and is unable to support the insect or to withstand the rigors of moulting.

Preferably the IGR insecticide is selected from one or more of diflubenzuron, dicyclanil, lufenuron, novaluron, triflumuron, and cyromazine. Particularly preferred is diflubenzuron.

Diflubenzuron (N- [(4-chlorophenyl- amino carbonyl]-2,6-difluorobenzamide) is a benzamide insecticide sold e.g. under the trade name Dimilin ™, Fleececare ™, Zenith ™, Ectogard ™, Fleecemaster ™, Blitz ™ and is used world wide for a variety of applications, especially on forest and field crops and also in ectoparasite control on animals.

Preferably the IGR insecticide is present in an amount of between 0.01% and 20 % by weight of the composition, more preferably between 0.01% and 10 % by weight of the composition.

In use on animals, delivered dose rates of diflubenzuron of between 50 mg and 4000 mg per animal are preferred. When used with sheep, a top level of diflubenzuron around 2000 mg is preferred and with cattle a top level of diflubenzuron around 4500 mg is preferred.

In a preferred embodiment the composition according to the invention comprises 2% w/v of the IGR, 30% w/v of the aromatic hydrocarbon solvent, 9.3 % w/v of the pyrrolidone solvent and up to 100 ml of the propylene glycol monoalkylether.

A composition as claimed in any one of the preceding claims characterized in that it further comprises a pesticide compound.

Such pesticide compounds may include active ingredients which have an immediate effect, rather than the relatively slowly acting IGR. Other ingredients that may be included in the composition of the current invention are pesticidial active ingredients that have an immediate "knock down effect" e.g. synthetic pyrethroids ( e.g permethrin, deltamethrin, cypermethrin, lambdacyhalothrin , fenvalerate, resmethrin, tralomethrin), acetylcholinesterase inhibitors as carbamates (e.g. carbaryl, benziocarb, fenoxycarb, proxopur), or organophosphates (e.g.dichlorvos, dimethoate, cythioate, fenthion, fluthion, tetrachlorvinos, chlorpyrifos, coumaphos, diazinon, phosmet, parathion, trichlorfon, temephos), acetylcholine mimics (e.g. nicotine, immidacloprid), GABA Antagonists (e.g. fipronil and amitraz).

The current invention further provides a method for making a pesticidial composition for local application to an animal characterised in that it comprises in general the steps of dissolving the insect growth regulator (IGR) in a pyrrolidine solvent by stirring at ambient temperature and adding an aromatic hydrocarbon solvent and a propylene glycol monoalkyl ether to the mixture with stirring.

The composition may be formulated for application by a particular method, for example spraying, in which case the formulation may be presented as an aerosol using a liquid or gas propellent.

As will be well known to a person skilled in the art additional ingredients such as surface active ingredients, colouring agents, and fragrances can also be used as desired.

The current invention further provides a non-therapeutic method for treating or controlling insects or parasites on an animal which includes externally applying to an animal an effective amount of a composition comprising an effective amount of an insect growth regulator (IGR) and a solvent system comprising an aromatic hydrocarbon solvent and a propylene glycol monoalkylether and a pyrrolidone solvent.

In the agricultural sector the composition could be applied by any known means, such as spraying the entire body surface of the animal, or as pour on or spray, directly to the likely area or actual area of infestation.

In the past, animals have generally been treated for the control of insects, and internal and external parasites, by either dipping the whole animal in a bath containing the parasiticidal active agent or by spraying the entire body surface of the animal. More recently, it has been found that a number of parasiticidal active agents may be applied by a localised application (so-called "pour-on"). Whereby the active ingredient migrates as to protect the whole external surface of the animal. By "localised" application it is meant that the active ingredient is only applied to a minor portion of the outer surface of the animal, generally as a line or spot on the animals back.

As the composition is effective against both the larval and adult stages of the Class Insecta, the composition could also be delivered as an aerosol to kill adult stages of flies, fleas etc. in the domestic environment, followed by a sustained preventive effect as the composition also appears to exhibit a continued effect on insect larvae that come into contact with the composition. For example after application to a surface insect larvae are also killed after the solvent bases have evaporated and the diflubenzuron continues to exhibit its IGR effect.

The method according to the present invention may be used control ticks, fleas, flies (for example homfly, sheep blowfly, buffalo fly, nuisance fly), lice (for example cattle and sheep lice) and mites (for example sheep mites) on animals.

Common fly species in Australasia are e.g. Lucilia cuprina (Green blowfly or Australian sheep blowfly), Lucilia serricata (European green blowfly), Chrysomya rufifacies (Hairy maggot fly), Chrysomya varipes (Small green blowfly), Calliphora stygia (Common brown blowfly), Calliphora augur (Lesser brown blowfly (eastern), Calliphora novicia (Lesser brown blowfly (western). Important lice species in ruminant animals are Bovicola spp. and Linognathus spp (e.g. Bovicola ovis).

These species are indicative only, and the method may be used to treat a wide variety of insect-parasites on an animal.

The method may be used to treat or control insects and parasites on a variety of animals including livestock animals as sheep, cattle, deer, goats, pigs, and companion animals as horses, dogs and cats. The animal may also be a bird.

### Example 1

By way of example, a preferred composition according to the invention is shown in Table 1. This composition was made as follows:
20.43 kg of diflubenzuron were dissolved in 306.4 kg of N-methyl-2-pyrrolidone with stirring at ambient temperature In a 1000 L manufacturing vessel. 0.1 kg Macrolex Yellow 3G, 3.06 kg of Karona fragrance and 95 kg of Solvesso 150 were added into the vessel and dissolved with stirring. Finally dipropylene glycol methyl ether (Dowanol DPM/ Icinol DPM) up to volume to 1000 L was added to the mixture with stirring.

**Table 1:**

| Batch 20310 | | | |
|---|---|---|---|
| Ingredient Name (common or chemical) | CAS Number | Quantity %W/V | Function |
| Diflubenzuron | 35367-38-5 | 2.00 | Active (IGR) |
| N-Methylpyrrolidone | 872-50-4 | 9.30 | Solvent |
| Solvesso 150 | 647742-94-5 | 30.00 | Solvent |
| Macrolex yellow | - | 0.01 | Dyestuff |
| Karona fragrance | 1993 | 0.30 | Fragrance |
| Dipropylene glycol methyl ether | 34590-94-8 | To 100 ml | Solvent |

### Example 2

The composition as shown in Table 1 was tested in terms of contact effect against Lucilia cuprina larvae using a concentration response test with blowfly larvae.

Material and methods: 1 ml of each insecticide solution was pipetted onto paper strips. These paper strips are dried and placed into vials. Lucilia cuprina 1^{st} instar larvae were placed into the vials and than the vial was plugged and incubated. Lucilia cuprina larvae were examined 16 hours later with stereo- microscope for assessment of mortality/survival and the percentage mortality was calculated.

Results: The summary of the probit analysis of contact tests includes comparisons of standard diflubenzuron aqueous formulation with both high and low resistant strains of Lucilia cuprina is shown in Table 2 below.

**Table 2 :**

| Contact effect on Lucilia cuprina larvae | | | |
|---|---|---|---|
| Low DF resistant strain | | | |
| Treatment | LC ₅₀(ppm) | LC ₉₅(ppm) | SE (slope) |
| New Formulation Batch 20310 | 0.28 | 1.05 | 2.34+/-0.45 |
| Standard D F (aqueous) | 0.32 | 1.48 | 2.46+/-0.25 |

| High DF resistant strain | | | |
|---|---|---|---|
| Treatment | LC₅₀(ppm) | LC ₉₅(ppm) | SE (slope) |
| New Formulation Batch 20310 | 2.30 | 7.05 | 3.39+/-0.62 |
| Standard DF (aqueous) | 4.51 | 18.94 | 2.64+/-0.39 |

As can clearly be seen in Table 2, the use of the composition as shown in Table 1 has a strong contact kill effect against low diflubenzuron resistant strain, showing an LC95 at 1.05ppm. In addition, with a high diflubenzuron resistant strain, the composition as shown in Table 1, in comparison with a standard aqueous diflubenzuron formulation showed a significant increase in efficacy particularly at the LC₉₅ level. This result indicates that the composition as shown in Table 1 may be of use in combating strains of insects, which exhibit resistance to IGRs.

It can be noted that the LC₅₀ for the high DF resistant strain differs with the two formulations and this has been confirmed by comparing the formulation of an aqueous pour on formulation with the composition according to the invention. There appears to be a more toxic effect of the diflubenzuron solvent formulation than the aqueous based formulation especially when considering the 2% concentration of the composition as shown in Table 1 versus the 2.5% concentration of the aqueous formulation.

### Example 3

Tests have also been carried out on direct action of the composition as shown in Table 1 on Lucilia cuprina adults. The following data represents at 10,000ppm half the normal concentration of 20,000ppm applied in the commercial formulation. Both contact and as a topical were evaluated. It should be noted that, in this specification, both the contact and topical application methods referred to in Table 3 are intended to be included within the meaning of "contact kill".

### Material and methods:

### Contact activity

Two concentrations of the formulation (10,000 ppm and 1000 ppm) were made up in a serial dilution using acetone as the diluent. Whatman filter paper was placed in the base of 9cm glass petri dishes and 1 ml of each dilution was spread onto each. A control dish was made using just acetone. The acetone was allowed to evaporate under a fume hood until the papers were dry. Two replicates for each treatment and control were prepared.

Using CO₂ as an anaesthetic, ten 1-week-old adult flies of similar size were placed in each dish and the lids replaced. To feed the flies a cotton-bud moistened with a sugar solution had been attached to the underside of each lid. The flies were checked for full recovery from the anaesthetic and were replaced if they did not recover.

The dishes were placed in a lit incubator at 25 ° C allowing the flies contact with the impregnated filter papers. Dead flies in each dish were recorded after 24 hours and mortality calculated.

### Topical application

1-week-old adult flies of similar size were selected for topical application with the two dilutions used above and an acetone control. Each fly was anaesthetised with CO₂, held lightly and treated on the dorsal surface of the thorax with 1 micro litre of one of the three solutions using a 'Drummond micro-cap' micropipette. Ten flies were used in each of the three treatments with two additional flies dosed in each and kept separate as extras. Two replicates of each treatment were used. Flies were placed in petri dishes with untreated filter paper on their bases and covered with lids with sugar-impregnated cotton-buds attached, as in the contact tests above. Flies were checked for full recovery from the anaesthetic and replaced with flies from the extra ones dosed if they did not recover.

The dishes were placed in a lit incubator at 25 ° C. Dead flies in each dish were recorded after 24 hours and mortality calculated

**Table 3 :**

| Mortality Test Adult Lucilia cuprina | | |
|---|---|---|
| | Adult Lucilia cuprina mortality | |
| | 10000 ppm | 100 ppm |
| Contact | 100% | 80% |
| Topical | 100% | 60% |

### Results:

The results of Table 3 can be compared with standard known aqueous formulation concentrations of 20,000ppm for preventive action. Thus it can be seen that 100% mortality is achieved against an adult stage insect at approximately half the concentration of diflubenzuron in the composition.

The foregoing describes the invention including a preferred form thereof. Modifications and alternatives as will be known to a skilled person are intended to be included within the scope of the invention disclosed.

## Claims

1. A pesticidal composition for local application to an animal, **characterized in that** it comprises an effective amount of an insect growth regulating insecticide (IGR) and a solvent system comprising an aromatic hydrocarbon solvent and a propylene glycol monoalkylether and a pyrrolidone solvent.

2. The composition according to claim 1, **characterized in that** the aromatic hydrocarbon solvent is Solvesso 150™ or Solvesso 200™.

3. The composition according to claim 1 to 2, **characterized in that** the content of the aromatic hydrocarbon solvent is between 20-60% by weight based on the total weight of the composition.

4. The composition according to claims 1 to 3, **characterized in that** the propylene glycol monoalkyl ether is dipropylene glycol monomethyl ether.

5. The composition according to claims 1 to 4, **characterized in that** the pyrrolidone solvent is N-methyl-2- pyrrolidone.

6. The composition according to claim 5, **characterized in that** the content of the pyrrolidone solvent is 5-15% by weight based on the total weight of the composition.

7. The composition according to claims 1 to 6, **characterized in that** the insect growth regulating insecticide is a chitin synthesis inhibitor.

8. The composition according to claim 7, **characterized in that** the chitin synthesis inhibitor is selected from one or more of diflubenzuron, triflumuron, lufenuron or cyromazine

9. The composition according to claim 8, **characterized in that** the chitin synthesis inhibitor is diflubenzuron.

10. The composition according to claims 1 to 9, **characterized in that** it comprises 2.0 % w/v of the insect growth regulating insecticide, 30.0 % w/v of the aromatic hydrocarbon solvent, 58.7 % w/v of the propylene monoalkyl ether and 9.3 % w/v of the pyrrolidone solvent.

11. The composition as claimed in claims 1 to 10, **characterized in that** it comprises an additional pesticide compound.

12. A method for making a pesticidial composition for local application to an animal, **characterized in that** it comprises the steps of dissolving an insect growth regulating insecticide in a pyrrolidone solvent by stirring at ambient temperature and adding an aromatic hydrocarbon solvent and a propylene glycol monoalkyl ether to the mixture with stirring.

13. A non-therapeutic method for treating or controlling insects or parasites on an animal which includes externally applying to an animal an effective amount of a composition comprising an effective amount of an insect growth regulating insecticide and a solvent system, comprising an aromatic hydrocarbon solvent, a propylene glycol monoalkyl ether and a pyrrolidone solvent.

## Patentansprüche

1. Pestizide Zusammensetzung zur lokalen Anwendung auf ein Tier, **dadurch gekennzeichnet, dass** sie eine wirksame Menge eines Insektenwachstum regulierenden Insektizids (IGR) und ein Lösungsmittelsystem aufweist, welches ein aromatisches Kohlenwasserstoff-Lösungsmittel und ein Propylenglykolmonoalkyläther und ein Pyrrolidon-Lösungsmittel umfasst.

2. Zusammensetzung nach Anspruch 1, **dadurch gekennzeichnet, dass** das aromatische Kohlenwasserstoff-Lösungsmittel Solvesso 150 ™ oder Solvesso 220 ™ ist.

3. Zusammensetzung nach Anspruch 1 oder 2, **dadurch gekennzeichnet, dass** der Anteil des aromatischen Kohlenwasserstoff-Lösungsmittels zwischen 20 und 60 Gewichtsprozent in bezug auf das Gesamtgewicht der Zusammensetzung beträgt.

4. Zusammensetzung nach einem der Ansprüche 1 bis 3, **dadurch gekennzeichnet, dass** der Propylenglykolmonoalkyläther Dipropylenglykolmonomethyläther ist.

5. Zusammensetzung nach einem der Ansprüche 1 bis 4, **dadurch gekennzeichnet, dass** das Pyrrolidon-Lösungsmittel N-Methyl-2-Pyrrolidon ist.

6. Zusammensetzung nach Anspruch 5, **dadurch gekennzeichnet, dass** der Anteil des Pyrrolidon-Lösungsmittels zwischen 5 und 15 Gewichtsprozent in bezug auf das Gesamtgewicht der Zusammensetzung beträgt.

7. Zusammensetzung nach einem der Ansprüche 1 bis 6, **dadurch gekennzeichnet, dass** das Insektenwachstum regulierende Insektizid ein Chitinsynthese-Inhibitor ist.

8. Zusammensetzung nach Anspruch 7, **dadurch gekennzeichnet, dass** der Chitinsynthese-Inhibitor aus einem oder mehreren der Gruppe aus Diflubenzuron, Triflumuron, Lufenuron oder Cyromazin ausgewählt ist.

9. Zusammensetzung nach Anspruch 8, **dadurch gekennzeichnet, dass** der Chitinsynthese-Inhibitor Diflubenzuron ist.

10. Zusammensetzung nach einem der Ansprüche 1 bis 9, **dadurch gekennzeichnet, dass** sie 2% Gewicht/Volumen des das Insektenwachstum regulierenden Insektizids, 30% Gewicht/Volumen des aromatischen Kohlenwasserstoff-Lösungsmittels, 58,7% Gewicht/Volumen des Propylenglykolmonoalkyläthers und 9,3% Gewicht/Volumen des Pyrrolidon-Lösungsmittels umfasst.

11. Zusammensetzung nach einem der Ansprüche 1 bis 10, **dadurch gekennzeichnet, dass** sie eine zusätzliche Pestizid-Verbindung enthält.

12. Verfahren zur Herstellung einer pestiziden Zusammensetzung zur lokalen Anwendung auf ein Tier, **dadurch gekennzeichnet, dass** es die Schritte umfasst der Auflösung eines Insektenwachstum regulierenden Insektizids in einem Pyrrolidon-Lösungsmittel durch Umrühren bei Umgebungstemperatur und Hinzufügen eines aromatischen Kohlenwasserstoff-Lösungsmittels und eines Propylenglykolmonoalkyläthers zu der Mischung unter Umrühren.

13. Nicht therapeutisches Verfahren zur Behandlung oder Kontrolle von Insekten oder Parasiten auf einem Tier, welches das externe Anwenden auf ein Tier von einer wirksamen Menge einer Zusammensetzung umfasst, die eine wirksame Menge eines Insektenwachstum regulierenden Insektizids und ein Lösungsmittelsystem aufweist, welches ein aromatisches Kohlenwasserstoff-Lösungsmittel und ein Propylenglykolmonoalkyläther und ein Pyrrolidon-Lösungsmittel umfasst.

## Revendications

1. Composition pesticide pour l'application locale sur un animal, **caractérisée en ce qu'**elle comprend une quantité efficace d'un insecticide régulant la croissance des insectes (IGR) et un système solvant comprenant un solvant hydrocarboné aromatique et un éther monoalkylique de propylène glycol et un solvant de type pyrrolidone.

2. Composition selon la revendication 1, **caractérisée en ce que** le solvant hydrocarboné aromatique est le Solvesso 150™ ou le Solvesso 200™.

3. Composition selon la revendication 1 ou 2, **caractérisée en ce que** la teneur en solvant hydrocarboné aromatique est comprise entre 20 et 60% en poids par rapport au poids total de la composition.

4. Composition selon l'une quelconque des revendications 1 à 3, **caractérisée en ce que** l'éther monoalkylique de propylène glycol est l'éther monométhylique de dipropylène glycol.

5. Composition selon l'une quelconque des revendications 1 à 4, **caractérisée en ce que** le solvant de type pyrrolidone est la N-méthyl-2-pyrrolidone.

6. Composition selon la revendication 5, **caractérisée en ce que** la teneur en solvant de type pyrrolidone est de 5 à 15% en poids par rapport au poids total de la composition.

7. Composition selon l'une quelconque des revendications 1 à 6, **caractérisée en ce que** l'insecticide régulant la croissance des insectes est un inhibiteur de la synthèse de la chitine.

8. Composition selon la revendication 7, **caractérisée en ce que** l'inhibiteur de la synthèse de la chitine est choisi parmi un ou plusieurs des diflubenzuron, trifluron, lufenuron ou cyromazine.

9. Composition selon la revendication 8, **caractérisée en ce que** l'inhibiteur de la synthèse de la chitine est le diflubenzuron.

10. Composition selon l'une quelconque des revendications 1 à 9, **caractérisée en ce qu'**elle comprend 2,0% en poids/volume de l'insecticide régulant la croissance des insectes, 30,0% en poids/volume du solvant hydrocarboné aromatique, 58,7% en poids/volume de l'éther monoalkylique de propylène glycol et 9,3% en poids/volume du solvant de type pyrrolidone.

11. Composition selon l'une quelconque des revendications 1 à 10, **caractérisée en ce qu'**elle comprend un composé pesticide supplémentaire.

12. Procédé pour la préparation d'une composition pesticide pour l'application locale sur un animal, **caractérisé en ce qu'**il comprend les étapes de dissolution de l'insecticide régulant la croissance des insectes dans un solvant de type pyrrolidone par agitation à la température ambiante, et d'addition au mélange d'un solvant hydrocarboné aromatique et d'un éther monoalkylique de propylène glycol avec agitation.

13. Procédé non thérapeutique pour le traitement ou le contrôle d'insectes ou de parasites sur un animal, qui comprend l'application externe sur un animal d'une quantité efficace d'une composition comprenant une quantité efficace d'un insecticide régulant la croissance des insectes et un système solvant, comprenant un solvant hydrocarboné aromatique, un éther monoalkylique de propylène glycol et un solvant de type pyrrolidone.
